# FASCICULE DE BREVET EUROPEEN

(11) **EP 3 271 080 B1**
(45) Date de publication et mention de la délivrance du brevet: **13.03.2019**
(21) Numéro de dépôt: 16714772.7
(22) Date de dépôt: 15.03.2016
(51) Int. Cl.: B32B 33/00, B32B 15/20, E04D 12/00

(54) **PROCÉDÉ DE FABRICATION D'UN ÉCRAN IMPERMÉABLE ET RESPIRANT**
VERFAHREN ZUR HERSTELLUNG EINER UNDURCHLÄSSIGEN UND ATMUNGSAKTIVEN ABSCHIRMUNG
METHOD FOR PRODUCING AN IMPERMEABLE AND BREATHABLE SCREEN

(30) Priorité: 19.03.2015 FR 1552286
(43) Date de publication de la demande: 24.01.2018
(73) Titulaire: MCI Technologies, 22950 Tregueux (FR)
(72) Inventeur: LEUCK, Hervé, 22950 Tregueux (FR); FAUBRY, Eric, 22950 Tregueux (FR)
(74) Mandataire: Cabinet Le Guen Maillet
(86) Numéro de dépôt international: PCT/EP2016/055508
(87) Numéro de publication internationale: WO 2016/146611

(56) Documents cités:
- EP-A1- 1 977 055
- EP-A1- 2 284 003

## Description

La présente invention concerne un procédé de fabrication d'un écran imperméable.

Il existe de nombreux types d'écrans thermiques mais aucun ne donne entière satisfaction notamment en ce qui concerne leurs assemblages. En effet pour obtenir les propriétés de perméance à la vapeur d'eau et d'imperméabilité à l'eau, les écrans actuels sont réalisés en juxtaposant différentes couches, chacune d'entre elles apportant des propriétés bien spécifiques.

Le brevet EP1977055B1 ainsi que la demande EP2284003A1 décrivent la fabrication d'un tel écran de sous toiture.

Du fait de la juxtaposition de différentes couches, la tenue dans le temps d'un tel assemblage peut être limitée et l'absorption des contraintes mécaniques peut également être restreinte.

Un objet de la présente invention est de proposer un procédé de fabrication d'un écran imperméable qui permet d'obtenir un écran imperméable qui ne présente pas les inconvénients de l'art antérieur et qui, en particulier, présente de bonnes qualités de perméance et d'imperméabilité, mais qui également, présente une meilleure résistance mécanique et une tenue dans le temps renforcée.

A cet effet, est proposé un procédé de fabrication d'un écran imperméable qui comporte :
- une étape de fourniture au cours de laquelle une feuille métallique présentant des micro-perforations est fournie,
- une étape de laminage au cours de laquelle la feuille métallique micro-perforée est laminée, et
- une étape d'enduction au cours de laquelle une couche réalisée en un matériau respirant et imperméable est enduite sur la feuille métallique ainsi laminée.

Avantageusement, l'étape d'enduction consiste en une enduction à chaud.

Avantageusement, l'étape de fourniture se décompose en une phase de fourniture au cours de laquelle une feuille métallique est fournie puis en une phase de perforation au cours de laquelle les perforations sont réalisées dans la feuille métallique.

Avantageusement, le procédé de fabrication comporte, entre l'étape de laminage et l'étape d'enduction, une étape de préparation qui comporte :
- une phase de dépose au cours de laquelle un produit aqueux filmogène est déposé sur la face de la feuille métallique qui est opposée à la face prévue pour recevoir la couche, et
- une phase d'évaporation au cours de laquelle l'eau contenue dans le produit aqueux filmogène est évaporée et
   après l'étape d'enduction, une étape de retrait au cours de laquelle le film issu du produit aqueux filmogène est retiré par dissolution dans l'eau.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue en coupe d'un écran imperméable, et
la Fig. 2 représente un procédé de fabrication d'un écran imperméable selon l'invention.

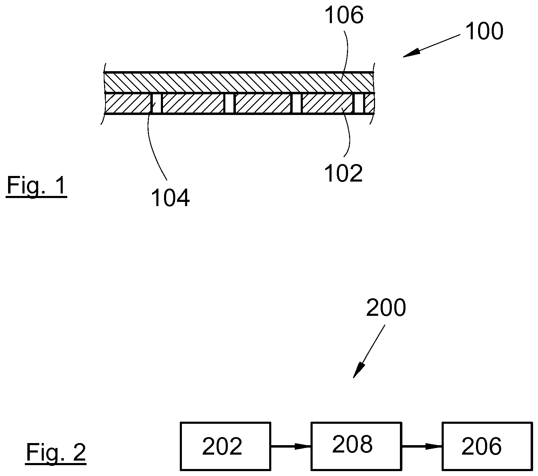

La Fig. 1 représente un écran imperméable 100 comprenant :
- une feuille métallique 102 micro-perforée, et
- une couche 106 réalisée en un matériau respirant et imperméable.

La feuille métallique 102 forme une barrière de réflexion thermique et est de préférence une feuille d'aluminium. Selon un mode de réalisation particulier, la feuille d'aluminium présente une épaisseur de 25 µm, mais elle peut varier de 10 µm à 50 µm.

La feuille métallique 102 présente des micro-perforations 104 dont le diamètre est par exemple de l'ordre de 100 µm, et une densité pouvant aller de 20 à 150 micro-perforations au cm². Mais le diamètre des micro-perforations 104 peut varier de 50 µm à 1000 µm, et plus précisément de 100 µm à 500 µm. De la même manière, la densité des micro-perforations 104 peut varier de 20 à 150 micro-perforations au cm².

La couche 106 est un polymère ou copolymère thermoplastique respirant à la vapeur d'eau et étanche à l'eau, tel que des produits thermoplastiques de type élastomère (TPE) comme le produit référencé sous la dénomination PEBAX® de la société ARKEMA®.

La Fig. 2 montre un procédé de fabrication 200 de l'écran imperméable 100. Le procédé de fabrication 200 comporte :
- une étape de fourniture 202 au cours de laquelle une feuille métallique 102 présentant des micro-perforations 104 est fournie,
- une étape de laminage 208 au cours de laquelle la feuille métallique 102 micro-perforée est laminée, et
- une étape d'enduction 206 au cours de laquelle une couche 106 réalisée en un matériau respirant et imperméable est enduite sur la feuille métallique 102 ainsi laminée.

L'écran imperméable 100 issu du procédé de fabrication comporte donc la feuille métallique 102 micro-perforée, et la couche 106 réalisée en un matériau respirant et imperméable, où la feuille métallique 102 micro-perforée est laminée et où la couche 106 est déposée par enduction sur la feuille métallique 102 micro-perforée et laminée. L'écran imperméable 100 se présente ainsi sous la forme d'un ensemble monolithique, c'est-à-dire qu'il se présente sous l'aspect d'un tout cohérent comme s'il était constitué d'un seul élément. L'écran imperméable 100 absorbe ainsi beaucoup plus facilement les contraintes mécaniques et sa tenue dans le temps est renforcée.

L'étape de laminage 208 permet d'aplatir la feuille métallique 102 micro-perforée afin d'éliminer les aspérités pouvant provenir de la réalisation des micro-perforations 104 et ainsi assurer un meilleure accrochage de la couche 106 sur la feuille métallique 102 lors de l'étape d'enduction. A la suite de l'étape de laminage 208, la feuille métallique 102 présente une surface totalement plane et uniforme. L'étape de laminage 208 s'effectue par exemple en passant la feuille métallique 102 perforée entre deux rouleaux en pression.

L'étape d'enduction 206 consiste plus particulièrement en une enduction à chaud. L'étape d'enduction 208 consiste à recouvrir toutes les micro-perforations 104 avec la couche 106 afin de les obturer et ainsi obtenir un écran imperméable 100 qui est respirant, étanche et constitue une excellente barrière thermique.

Lors de la mise en oeuvre du procédé de fabrication 200, la feuille métallique 102 peut être fournie déjà perforée ou être fournie sans perforation 104, l'étape de fourniture 202 se décompose alors en une phase de fourniture au cours de laquelle une feuille métallique 102 sans micro-perforation 104 est fournie puis en une phase de perforation au cours de laquelle les perforations 104 sont réalisées dans la feuille métallique 102.

Pour éviter qu'au cours de l'étape d'enduction 206, le matériau constituant la couche 106 s'écoule à travers les micro-perforations 104, le procédé de fabrication 200 comporte, entre l'étape de laminage 208 et l'étape d'enduction 206, une étape de préparation qui comporte :
- une phase de dépose au cours de laquelle un produit aqueux filmogène est déposé sur la face de la feuille métallique 102 qui est opposée à la face prévue pour recevoir la couche 106, et
- une phase d'évaporation au cours de laquelle l'eau contenue dans le produit aqueux filmogène est évaporée.

Le produit aqueux filmogène est par exemple un produit de type alcool polyvinylique carboxylé.

La phase d'évaporation permet d'obtenir une feuille d'aluminium dont une face est recouverte d'un film continu qui bouche les micro-perforations 104. La phase d'évaporation consiste par exemple à passer la feuille métallique 102 recouverte du produit aqueux filmogène dans un tunnel chauffant.

Ensuite, il est possible d'effectuer l'étape d'enduction 206 sur l'autre face de la feuille métallique 102 sans que le matériau constituant la couche 106 s'écoule à travers les micro-perforations 104.

Après l'étape d'enduction 206, le procédé de fabrication 200 comporte une étape de retrait au cours de laquelle le film issu du produit aqueux filmogène est retiré par dissolution dans l'eau. Cette étape de retrait n'agit pas sur la couche 106 car celle-ci constituée d'un thermoplastique élastomère est insoluble dans l'eau.

Après l'étape de retrait, il est préférable d'effectuer une étape de séchage au cours de laquelle la feuille métallique 102 et la couche 106 sont séchées, par exemple en passant dans un tunnel de séchage (80°C-100°C), pour permettre l'enroulement de l'écran imperméable 100.

Pour assurer encore un meilleur accrochage de la couche 106 sur la feuille métallique 102, des additifs appropriés peuvent être ajoutés au matériau constituant la couche 106.

Un tel écran imperméable 100 peut constituer la base pour des écrans de sous-toiture en le renforçant par exemple avec un tissu en fibre de verre.

## Revendications

1. Procédé de fabrication (200) d'un écran imperméable (100), ledit procédé de fabrication (200) comportant :
- une étape de fourniture (202) au cours de laquelle une feuille métallique (102) présentant des micro-perforations (104) est fournie,
- une étape de laminage (208) au cours de laquelle la feuille métallique (102) micro-perforée est laminée, et
- une étape d'enduction (206) au cours de laquelle une couche (106) réalisée en un matériau respirant et imperméable est enduite sur la feuille métallique (102) ainsi laminée.

2. Procédé de fabrication (200) selon la revendication 1, **caractérisé en ce que** l'étape d'enduction (206) consiste en une enduction à chaud.

3. Procédé de fabrication (200) selon l'une des revendications 1 ou 2, **caractérisé en ce que** l'étape de fourniture (202) se décompose en une phase de fourniture au cours de laquelle une feuille métallique (102) est fournie puis en une phase de perforation au cours de laquelle les perforations (104) sont réalisées dans la feuille métallique (102).

4. Procédé de fabrication (200) selon l'une des revendications 1 à 3, **caractérisé en ce qu'**il comporte, entre l'étape de laminage (208) et l'étape d'enduction (206), une étape de préparation qui comporte :
- une phase de dépose au cours de laquelle un produit aqueux filmogène est déposé sur la face de la feuille métallique (102) qui est opposée à la face prévue pour recevoir la couche (106), et
- une phase d'évaporation au cours de laquelle l'eau contenue dans le produit aqueux filmogène est évaporée et
après l'étape d'enduction (206), une étape de retrait au cours de laquelle le film issu du produit aqueux filmogène est retiré par dissolution dans l'eau.

## Patentansprüche

1. Verfahren zum Herstellen (200) einer undurchlässigen Abschirmung (100), wobei das Herstellungsverfahren (200) umfasst:
- einen Bereitstellungsschritt (202), in dessen Verlauf eine Metallplatte (102), die Mikroperforationen aufweist (104), bereitgestellt wird,
- einen Walzschritt (208), in dessen Verlauf die mikroperforierte Metallplatte (102) kaschiert wird, und
- einen Beschichtungsschritt (206), in dessen Verlauf eine Schicht (106), die aus einem atmungsaktiven und undurchlässigen Material hergestellt wird, auf die auf diese Weise kaschierte Metallplatte (102) aufgetragen wird.

2. Herstellungsverfahren (200) nach Anspruch 1, **dadurch gekennzeichnet, dass** der Beschichtungsschritt (206) in einer Heißbeschichtung besteht.

3. Herstellungsverfahren (200) nach einem der Ansprüche 1 oder 2, **dadurch gekennzeichnet, dass** der Bereitstellungsschritt (202) in eine Bereitstellungsphase zerfällt, in deren Verlauf eine Metallplatte (102) bereitgestellt wird, dann in eine Perforationsphase, in deren Verlauf die Perforationen (104) in die Metallplatte (102) eingebracht werden.

4. Herstellungsverfahren (200) nach einem der Ansprüche 1 bis 3, **dadurch gekennzeichnet, dass** es zwischen dem Walzschritt (208) und dem Beschichtungsschritt (206) einen Vorbereitungsschritt umfasst, der umfasst:
- eine Abscheidungsphase, in deren Verlauf ein filmbildendes wässriges Produkt auf der Seite der Metallplatte (102) abgeschieden wird, die der Seite gegenüberliegt, die die Schicht (106) aufnehmen soll, und
- eine Verdampfungsphase, in deren Verlauf das Wasser, das in dem filmbildenden wässrigen Produkt enthalten ist, verdampft wird, und
nach dem Beschichtungsschritt (206) einen Schrumpfschritt, in dessen Verlauf der Film aus dem filmbildenden wässrigen Produkt durch Auflösen in Wasser entfernt wird.

## Claims

1. Method for producing (200) an impermeable screen (100), said method for producing (200) comprising:
- a step of providing (202) during which a metallic sheet (102) having micro-perforations (104) is provided,
- a step of lamination (208) during which the micro-perforated metallic sheet (102) is laminated, and
- a step of coating (206) during which a layer (106) made of a breathable and impermeable material is coated on the metallic sheet (102) thus laminated.

2. Method for producing (200) according to claim 1, **characterized in that** the step of coating (206) consists in a hot coating.

3. Method for producing (200) according to any one of the claims 1 or 2, **characterized in that** the step of providing (202) is made of a phase of providing during which a metallic sheet (102) is provided then a step of perforation during which the perforations (104) are realized in the metallic sheet (102).

4. Method for producing (200) according to any one of the claims 1 to 3, **characterized in that** it comprises, between the step of lamination (208) and the step of coating (206), a step of preparation which comprises :
- a phase of deposit during which an aqueous film-forming product is deposited on the face of the metallic sheet (102) opposite to the face intended to receive the layer (106), and
- a phase of evaporation during which the water contained in the aqueous film-forming product is evaporated and
after the step of coating (206), a step of removing during which the film issued from the aqueous film-forming product is removed by dissolution in water.
